(19) Europäisches Patentamt / European Patent Office / Office européen des brevets

(11) **EP 2 143 688 B1**

(12) **FASCICULE DE BREVET EUROPEEN**

(45) Date de publication et mention
de la délivrance du brevet:
**07.09.2016   Bulletin 2016/36**

(51) Int Cl.:
*C01F 11/18* (2006.01)       *C09C 1/02* (2006.01)
*D21H 17/67* (2006.01)       *D21H 19/38* (2006.01)
*C08K 3/26* (2006.01)        *C08L 33/02* (2006.01)

(21) Numéro de dépôt: **08012233.6**

(22) Date de dépôt: **07.07.2008**

(54) **Procédé de fabrication de suspensions aqueuses de carbonate de calcium et suspensions obtenues ainsi que leurs utilisations**

Herstellungsverfahren von Wassersuspensionen aus Calciumhydrogencarbonat und so erhaltene Suspensionen sowie ihre Anwendungen

Method of producing aqueous suspensions of calcium carbonate and suspensions obtained, as well as the uses thereof

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(43) Date de publication de la demande:
**13.01.2010   Bulletin 2010/02**

(73) Titulaire: **Omya International AG
4665 Oftringen (CH)**

(72) Inventeurs:
• **Gane, Patrick
4852 Rothrist (CH)**
• **Buri, Matthias
4852 Rothrist (CH)**

(74) Mandataire: **Richebourg, Michel François
Cabinet Michel Richebourg
"Le Clos du Golf"
69, rue Saint-Simon
42000 Saint Etienne (FR)**

(56) Documents cités:
**WO-A-02/49766        WO-A-2005/095466
WO-A-2007/077484      US-A- 4 507 422
US-A1- 2006 287 423**

• **LOISEAU ET AL: "Dispersion of calcite by poly(sodium acrylate) prepared by reversible addition-fragmentation chain transfer (RAFT) polymerization" POLYMER, ELSEVIER SCIENCE PUBLISHERS B.V, GB, vol. 46, no. 19, 8 septembre 2005 (2005-09-08), pages 8565-8572, XP005036875 ISSN: 0032-3861**
• **JEAN MARIE LAMARCHE, JACQUES PERSELLO, ALAIN FOISSY: "Influence of molecular weight of sodium polyacrylate in calcium carbonate aqueous dispersions" INDUSTRIAL & ENGINEERING CHEMISTRY PRODUCT RESEARCH AND DEVELOPMENT, vol. 22, no. 1, mars 1983 (1983-03), pages 123-126, XP002510140**

**Description**

La présente invention concerne le domaine des matériaux minéraux obtenus par broyage en voie humide, éventuellement séchés et destinés aux applications dans l'industrie du papier, de la peinture, des matières plastiques ainsi que des mastics et plus particulièrement concerne un procédé de fabrication de suspensions aqueuses par broyage de carbonate de calcium en voie humide en vue d'obtenir une suspension aqueuse de carbonate de calcium utilisée dans l'industrie papetière.

Le carbonate de calcium naturel broyé -ou GCC- est un pigment minéral communément mis en oeuvre dans les sauces de couchage destinées à recouvrir la feuille de papier, et à conférer à celle-ci certaines propriétés optiques telle que l'opacité. Ce carbonate de calcium est initialement mis en oeuvre sous forme d'une suspension aqueuse, plus simple à transporter, à manipuler et à transvaser qu'une poudre sèche. Ladite suspension entre ensuite dans la composition d'une sauce de couchage, cette dernière servant à coucher la feuille de papier.

Une méthode pour fabriquer une telle suspension consiste à broyer dans l'eau ledit carbonate de calcium en présence d'un agent d'aide au broyage et ce, jusqu'à obtenir une certaine granulométrie, c'est-à-dire une certaine répartition des tailles de particules. Au cours de cette étape, on met en oeuvre un agent dit « d'aide au broyage », dont la fonction est de faciliter l'action mécanique du broyage. Il s'agit en général d'un homopolymère ou d'un copolymère de l'acide acrylique, obtenu par des procédés de polymérisation classiques en émulsion ou en solution (voir notamment les documents FR 2 539 137, FR 2 683 536, FR 2 683 537, FR 2 683 538, FR 2683 539, FR 2 683 532, FR 2 683 533).

Dans un second temps, on augmente l'extrait sec de cette suspension c'est-à-dire la quantité en poids sec de carbonate de calcium par rapport au poids total de la suspension par élimination de l'eau permettant ainsi de délivrer un produit final le plus riche possible en matière minérale.

Il est important de disposer alors d'une suspension aqueuse de matière minérale qui reste suffisamment fluide au cours du temps. Cette propriété peut être appréhendée très simplement à travers des mesures de viscosités Brookfield™ de la suspension, immédiatement après broyage, puis 8 jours après et ce, sans pour autant avoir agité le milieu. On met ainsi à jour d'éventuelles dérives de viscosité de la suspension que l'homme du métier cherchera à éviter : il s'agit d'une partie du problème technique résolu par la présente invention.

Une autre contrainte, intégrée par la présente invention est l'obtention d'une suspension de carbonate de calcium conduisant à une opacité de la feuille de papier couchée la plus élevée possible. Or, on sait depuis longtemps que l'opacité est reliée à une certaine distribution des tailles de particules individuelles de carbonate de calcium, au sein de la suspension aqueuse. Cette distribution doit être la plus « étroite » possible ; on parle aussi d'une répartition granulométrique « verticale », au regard de la forme de la courbe obtenue (pourcentage en poids des particules ayant un diamètre donné en fonction du diamètre).

La « verticalité » ou « étroitesse » de la distribution des tailles de particules est reflétée par « le facteur de pente », f, paramètre bien connu de l'homme du métier. Ce facteur de pente est calculé comme étant égal au rapport entre le pourcentage en poids de particules dont le diamètre est inférieur à un diamètre $d_1$ et le pourcentage en poids des particules dont le diamètre est inférieur à un autre diamètre $d_2$, soit :

$$f = (d_1 \, / \, d_2) \text{ x } 100$$

Plus le facteur de pente est important, plus la distribution des tailles de particules est « étroite » et meilleure sera l'opacité du papier couché final. Cette idée est notamment soutenue dans le document « Pigment concepts for improved paper and print properties » (P. Burri, ATIP Conference, June 23, 2000 Tour), tout particulièrement en page 4.

Ainsi, le document EP 0 894 836 décrit une suspension aqueuse de GCC, dont une des caractéristiques réside dans un facteur de pente ($d_{50} \, / \, d_{20}$) compris entre 1,5 et 2, préférentiellement entre 1,5 et 1,75. Compte tenue de la définition particulière donnée au facteur de pente, cette invention s'oriente bien vers une répartition étroite des tailles de particules : il est aussi indiqué que l'opacité des produits finaux s'en trouve améliorée.

De même, le document WO 2007 / 031870 qui décrit le co-broyage d'un carbonate de calcium précipité ou PCC avec un GCC, en milieu aqueux, permet l'obtention d'un pigment co-broyé ayant un facteur de pente 100 x ($d_{30} \, / \, d_{70}$) supérieur à 30, préférentiellement 40, très préférentiellement 45 et permet l'augmentation de l'opacité du papier final (voir tableau 2).

Dans le même sens, l'homme du métier connaît également les documents EP 0 850 685, WO 00/39029 et EP 0 894 833 qui divulguent un procédé dont l'étape de préparation de la suspension aqueuse s'effectue de sorte à aboutir à une teneur en solide pas plus importante que 40% ou encore du document EP 0 607 840 qui divulgue un procédé dont la concentration en matière solide est inférieure ou égale à 24 %.

En parallèle, une autre option à cette nécessité de broyer initialement le carbonate de calcium pour obtenir un facteur de pente élevé, réside en ce que l'homme du métier cherche à maximiser l'extrait sec final à travers la deuxième étape d'élimination de l'eau qui est particulièrement coûteuse en terme d'énergie. Idéalement, il faudrait donc broyer le carbonate de calcium jusqu'à obtenir un extrait sec le plus élevé possible pour minimiser l'étape d'évaporation de l'eau, tout en conservant un facteur de pente élevé en vue de doper l'opacité du papier couché.

Poursuivant ses recherches pour offrir à l'homme du métier une solution permettant :

- d'obtenir un facteur de pente plus élevé qu'avec les agents d'aide au broyage de l'art antérieur, et donc une opacité améliorée ou au moins égale,
- tout en broyant initialement à la même concentration, et en éliminant l'eau jusqu'au même extrait sec final,
- de disposer d'une suspension aqueuse finale stable dans le temps,

la Demanderesse a mis au point un procédé de fabrication d'une suspension aqueuse de carbonate de calcium naturel caractérisé en ce qu'il comprend les étapes suivantes :

a) pré-broyer à sec et/ou en humide le carbonate de calcium jusqu'à un diamètre moyen de 0,5 à 500 $\mu$m ($d_{50}$) en présence ou en l'absence d'agents dispersants notamment tels que décrits dans la demande de brevet français FR 07 01591,

b) former une suspension aqueuse du produit issu de l'étape a) par ajout de la quantité nécessaire d'eau pour obtenir une teneur en carbonate de calcium sec comprise entre 10% et 80%, préférentiellement entre 30% et 50% et très préférentiellement entre 35% et 45%,

c) broyer la suspension issue de l'étape b) en présence d'un homopolymère et/ou d'un copolymère de l'acide (méth)acrylique présentant simultanément un poids moléculaire compris entre 8 000 g/mol et 15 000 g/mol, préférentiellement entre 10 000 g/mol et 14 000 g/mol, très préférentiellement de l'ordre de 12 000 g/mol et une teneur molaire en chaînes polymériques de poids moléculaire inférieur à 3 000 g/ mol inférieure à 20%, préférentiellement 15%, très préférentiellement 10%,

d) éventuellement concentrer la suspension aqueuse obtenue à l'étape c) par tout moyen connu de manière à obtenir une teneur en carbonate de calcium au moins égale à 5 % au-dessus de la concentration de l'étape b) ou c), de manière préférentielle comprise entre 60% et 80% en poids, très préférentiellement comprise entre 65% et 75% en poids,

e) ajouter éventuellement un agent dispersant à la suspension aqueuse pendant ou après l'étape d),

f) éventuellement sécher par tout moyen connu le produit obtenu à l'étape c) ou d) ou e).

Il est à noter que dans toute la présente Demande, les poids moléculaires, de même que les teneurs molaires en chaînes polymériques dont le poids moléculaire est inférieur à une certaine valeur, sont déterminés selon une méthode particulière telle que décrite en introduction des exemples.

Aussi, et de manière surprenante, par rapport à un art antérieur mettant en oeuvre un agent d'aide au broyage classique, c'est-à-dire d'un homopolymère et/ou d'un copolymère de l'acide (méth)acrylique ne réunissant pas les deux conditions précédentes, les homopolymères et les copolymères de l'acide (méth)acrylique mis en oeuvre dans le procédé selon l'invention permettent :

- tout en broyant au même extrait sec que pour l'art antérieur,
- d'obtenir un facteur de pente plus élevé 100 * ($d_{25}$ / $d_{75}$) et donc une meilleure opacité (S),
- tout en fabriquant aussi des suspensions aqueuses stables dans le temps.

Concrètement, l'homme du métier a identifié depuis de nombreuses années un paramètre qui, mesuré au niveau de la suspension de carbonate de calcium, évolue dans le même sens que l'opacité de la feuille de papier couché : il s'agit du coefficient de diffusion de la lumière de la suspension (S exprimé en $m^2$/kg), celle-ci étant appliquée sur un support. Dans la présente Demande, on s'appuiera notamment sur la mesure de ce coefficient S au niveau de la suspension aqueuse de carbonate de calcium (la méthode de mesure du coefficient S est indiquée dans le document FR 2 885 906).

Ainsi, un des mérites de la Demanderesse est d'avoir su identifier que le choix d'une gamme de poids moléculaires particuliers, en combinaison avec une fraction limitée de chaînes polymériques de bas poids moléculaire, constituait la combinaison optimale pour obtenir une suspension aqueuse à la fois stable et présentant un facteur de pente important, synonyme d'une opacité de la feuille de papier couché améliorée.

En outre, il est aisé pour l'homme du métier de fabriquer des polymères présentant cette combinaison de caractéristiques, notamment à partir des techniques dites de « séparation », et des méthodes de polymérisation radicalaire contrôlée telle que notamment la technique dite « RAFT » (transfert réversible par addition fragmentation).

Les premières sont des méthodes relativement anciennes (début des années 80), et qui visent à « purifier » le polymère tel qu'obtenu après sa synthèse. Elles mettent en oeuvre des étapes permettant d'isoler des populations de chaînes moléculaires polymériques présentant un poids moléculaire donné (à travers un choix de solvants et de températures appropriés) et conduisent à l'obtention d'un poids moléculaire donné d'une part, et à la teneur choisie pour les chaînes polymériques présentant par exemple un poids moléculaire inférieur à une certaine limite. L'homme du métier pourra notamment se référer au document US 4 507 422.

Les secondes sont des techniques de fabrication qui permettent, notamment par la mise en oeuvre de catalyseurs particuliers, de contrôler la distribution des poids moléculaires au cours de la réaction de polymérisation. Le choix des conditions de synthèse (tel que notamment le ratio catalyseur / monomères mis en oeuvre) permet à l'homme du métier d'atteindre à la fois un poids moléculaire donné, ainsi qu'une teneur en chaînes polymériques dont le poids moléculaire est inférieur à une certaine limite. L'homme du métier pourra notamment se reporter aux documents WO 02 / 070571, WO 2004 / 014967 et WO 2005 / 095466 , de même qu'aux publications « Dispersion of calcite by poly(sodium acrylate) prepared by reversible addition-fragmentation chain transfer (RAFT) polymerization » (Polymer (2005, 46(19), 2005, pp 8565-8572) et « Synthesis and Characterization of Poly(acrylic acid) Produced by RAFT Polymerization. Application as a Very Efficient Dispersant of $CaCO_3$,Kaolin, and $TiO_2$ » (Macromolecules, 36(9), 2003, pp 3066-3077).

En outre, il est important de souligner qu'aucun des documents précités à l'égard des méthodes de séparation et de polymérisation radicalaire contrôlée, ne se rapporte de manière particulière à un procédé de fabrication de carbonate de calcium, par broyage puis concentration en milieu aqueux. On notera ici qu'il s'agit d'un procédé très particulier, tel que présenté dans le document WO 02 / 49765, où un polymère acrylique présentant des taux de neutralisation très spécifiques en cations mono- et di-valents conduit à une suspension aqueuse avec une faible quantité d'agent de broyage non adsorbé à la surface du carbonate de calcium. Par ailleurs, aucun des documents précités sur les techniques de séparation et de polymérisation radicalaire contrôlée ne renseigne quant à la capacité d'un homopolymère ou d'un copolymère de l'acide (méth)acrylique d'être un bon activateur de l'opacité, si ledit homopolymère réunit les deux conditions particulières objet de la présente invention.

Aussi, un premier objet de l'invention consiste en un procédé de fabrication d'une suspension aqueuse de carbonate de calcium naturel caractérisé en ce qu'il comprend les étapes suivantes:

a) pré-broyer à sec et/ou en humide le carbonate de calcium jusqu'à un diamètre moyen de 0,5 à 500 $\mu$m ($d_{50}$) en présence ou en l'absence d'agents dispersants,

b) former une suspension aqueuse du produit issu de l'étape a) par ajout de la quantité nécessaire d'eau pour obtenir une teneur en carbonate de calcium sec comprise entre 10% et 80%, préférentiellement entre 30% et 50% et très préférentiellement entre 35% et 45%,

c) broyer la suspension issue de l'étape b) en présence d'un homopolymère et/ou d'un copolymère de l'acide (méth)acrylique présentant simultanément un poids moléculaire compris entre 8 000 g/mol et 15 000 g/mol, préférentiellement entre 10 000 g/mol et 14 000 g/mol, très préférentiellement de l'ordre de 12 000 g/mol et une teneur molaire en chaînes polymériques de poids moléculaire inférieur à 3 000 g/ mol inférieure à 20%, préférentiellement 15%, très préférentiellement 10%,

d) éventuellement concentrer la suspension aqueuse obtenue à l'étape c) par tout moyen connu

de manière à obtenir une teneur en carbonate de calcium au moins égale à 5 % au-dessus de la concentration de l'étape b) ou c), de manière préférentielle comprise entre 60 % et 80 % en poids, très préférentiellement comprise entre 65% et 75 % en poids,

e) ajouter éventuellement un agent dispersant à la suspension aqueuse pendant ou après l'étape d),

f) éventuellement sécher par tout moyen connu le produit obtenu à l'étape c) ou d) ou e).

Dans une première variante, ce procédé est aussi caractérisé en ce que ledit homopolymère et/ou copolymère de l'acide (méth)acrylique est obtenu par polymérisation radicalaire en émulsion ou en solution, suivi par au moins une étape de séparation statique ou dynamique, ladite étape de séparation mettant en oeuvre un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

Dans une seconde variante, ce procédé est aussi caractérisé en ce que ledit homopolymère et/ou copolymère de l'acide (méth)acrylique est obtenu par polymérisation radicalaire contrôlée, préférentiellement par polymérisation par transfert réversible par addition fragmentation (RAFT).

Il est important de souligner que l'homme du métier dispose, à partir de ses connaissances et de l'état de la technique, de tous les éléments nécessaires pour fabriquer un polymère vérifiant la double caractéristique objet de la présente Demande : en ce sens, il est à-même de synthétiser les polymères objets de la présente invention. Ceci est notamment souligné dans l'état de la technique relatif à la fabrication de polymères acryliques, en vue de contrôler à la fois leur poids moléculaire et leur indice de polymolécularité (et donc naturellement le taux d'oligomères soit la proportion de chaînes polymériques dont le poids moléculaire est inférieur à une certaine valeur). On pourra se reporter aux documents précités (voir haut de la page précédente).

Dans cette seconde variante, cette utilisation est aussi caractérisée en ce que la polymérisation par transfert réversible par addition fragmentation (RAFT) met en oeuvre au moins un agent de transfert de chaîne, tel que revendiqué dans les documents WO 02 / 070571, WO 2004 / 014967 et WO 2005 / 095466,

De manière générale, ce procédé est aussi caractérisé en ce que ledit homopolymère et/ou copolymère de l'acide (méth)acrylique est totalement acide, ou totalement ou partiellement neutralisé par un agent de neutralisation choisi parmi les hydroxydes de sodium, de potassium, les hydroxydes et / ou oxydes de calcium, de magnésium, l'ammoniaque, ou leurs mélanges, préférentiellement par un agent de neutralisation choisi parmi l'hydroxyde de sodium, de potassium, l'ammoniaque, ou leurs mélanges, très préférentiellement par un agent de neutralisation qui est l'hydroxyde de sodium.

De manière générale, ce procédé est caractérisé en ce que, outre l'acide (méth)acrylique, ledit copolymère de l'acide (méth)acrylique contient un autre monomère choisi parmi l'anhydride (méth)acrylique, le (méth)acrylamide, les esters (méth)acryliques et préférentiellement parmi les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés, le styrène, l'alpha-méthylstyrène, le styrène sulfonate, ou l'acide acrylamido-2-méthyl-2-propane-sulfonique, les phosphates d'acrylate et de méthacrylate d'éthylène glycol, et leurs mélanges, et en ce que cet autre monomère est préférentiellement l'acrylamide.

Ce procédé est aussi caractérisé en ce que ledit homopolymère et/ou copolymère de l'acide (méth)acrylique est mis en oeuvre à raison de 0,1 à 1,0 %, préférentiellement de 0,2 à 0,6 % en poids sec, par rapport au poids sec de carbonate de calcium.

Ce procédé est aussi caractérisé en ce que, outre ledit homopolymère et/ou copolymère de l'acide (méth)acrylique, un autre homopolymère et/ou copolymère de l'acide (méth)acrylique est mis en oeuvre conjointement pendant l'étape de concentration d).

Ce procédé est aussi caractérisé en ce que la concentration en poids sec de carbonate de calcium de la suspension aqueuse obtenue à l'issue de l'étape de broyage c) est comprise entre 10% et 80% du poids total de ladite suspension, préférentiellement comprise entre 30% et 50%, très préférentiellement entre 35% et 45%.

Dans une variante, ce procédé est aussi caractérisé en ce que la concentration en poids sec de carbonate de calcium de la suspension aqueuse obtenue à l'issue de l'étape de concentration d) est au moins égale à 5 % au-dessus de la concentration du produit de l'étape b) ou c), de manière préférentielle est comprise entre 60% et 80%, et très préférentiellement comprise entre 65% et 75 %.

Un autre objet de l'invente réside dans la suspension aqueuse de carbonate de calcium contenant ledit homo- ou copolymère ainsi que son utilisation dans l'industrie du papier, de la peinture, des matières plastiques ainsi que des mastics et plus particulièrement son utilisation en application papetière comme la charge de masse ou le couchage.

L'invention réside aussi dans la sauce de couchage ou la composition de charge de masse contenant ladite suspension aqueuse de carbonate de calcium.

## EXEMPLES

### Préambule

Dans l'ensemble de la présente Demande, les caractéristiques granulométriques relatives au carbonate de calcium sont déterminées à partir d'un appareil Sedigraph™ 5100, commercialisé par la société MICROMERITICS™.

Le facteur de diffusion S de la lumière est déterminé selon la méthode donnée dans le document FR 2 885 906.

Les poids moléculaires, les teneurs molaires de chaînes polymériques dont le poids moléculaire est inférieur à une valeur donnée, sont déterminés selon la méthode suivante.

Une prise d'essai de la solution de polymère correspondant à 90 mg de matière sèche est introduite dans un flacon de 10 mL. Il est ajouté de la phase mobile, additionnée de 0,04 % de DMF, jusqu'à une masse totale de 10 g. La composition de cette phase mobile est la suivante : NaHCO3 : 0,05 mol/L, NaNO3 : 0,1 mol/L, triéthanolamine : 0,02 mol/L, NaN3 0,03 % massique.

La chaîne de CES est composée d'une pompe isocratique de type Waters™ 510, dont le débit est réglé à 0.8 mL/min, d'un passeur d'échantillons Waters 717+, d'un four contenant une précolonne de type « Guard Column Ultrahydrogel Waters™ », suivie d'une colonne linéaire de type « Ultrahydrogel Waters TM » de 30 cm de long et 7,8 mm de diamètre intérieur.

La détection est assurée par un réfractomètre différentiel de type Waters™ 410. Le four est porté à la température de 60°C, et le réfractomètre est porté à la température de 45°C.

La CES est étalonnée avec une série d'étalons polyacrylate de sodium fournis par Polymer Standard Service de poids moléculaire au sommet de pic compris entre 2000 et $1.10^6$ g/mol et d'indice de polymolécularité compris entre 1,4 et 1,7, ainsi qu'avec un polyacrylate de sodium de poids moléculaire égal à 5 600 g/mole et d'indice de polymolécularité égal à 2,4.

La courbe d'étalonnage est de type linéaire et prend en compte la correction obtenue grâce au marqueur de débit (DMF).

L'acquisition et le traitement du chromatogramme sont effectués par l'utilisation du logiciel PSS WinGPC Scientific v 4.02. Le chromatogramme obtenu est intégré dans la zone correspondant à des poids moléculaires supérieurs à 65 g/mol.

**Exemple 1**

Cet exemple illustre un procédé de fabrication de carbonate de calcium par broyage puis concentration, selon l'invention ou selon l'art antérieur, un même polymère dispersant étant utilisé pendant l'étape de concentration. Il illustre l'influence des polymères mis en oeuvre pendant l'étape de broyage sur la stabilité des suspensions obtenues au final (mesure de certaines viscosités Brookfield™ à différents instants), de même que sur la distribution des tailles de particules -facteur de pente f = 100 x ($d_{25}$ / $d_{75}$)- et sur le coefficient de diffusion de la lumière (S).

Pour chacun des essais n° 1 à 10, on forme une suspension aqueuse de carbonate de calcium pour la broyer dans l'eau, selon les méthodes bien connues de l'homme du métier (on pourra se reporter au protocole de broyage tel que décrit dans le document WO 02 / 49765).

Ce carbonate de calcium est un marbre de Carrare pré-broyé à sec jusqu'à un diamètre médian d'environ égal à 10 $\mu$m. Cette étape de broyage vise à obtenir une teneur en poids sec de carbonate de calcium égale à 50 % du poids total de la suspension.

Elle est effectuée en présence de 0,45 % en poids sec d'un polymère selon les essais n° 1 à 10, par rapport au poids sec total de carbonate de calcium.

Dans une étape ultérieure, la suspension est concentrée à l'aide d'un évaporateur thermique de laboratoire de marque EPCON™ jusqu'à obtenir une concentration en poids sec de carbonate de calcium égale à 71 % du poids total de la suspension. Cette étape de concentration est réalisée en présence de 0,25% en poids sec par rapport au poids sec de carbonate de calcium, d'un mélange (70/30 ratio en poids sec) d'homopolymère de l'acide acrylique, de poids moléculaire égal à 10 400 g/mol, dont 100 % en moles des sites carboxyliques sont neutralisés par la soude, et d'acide phosphorique

Essai n° 1

Cet essai illustre l'art antérieur et met en oeuvre un homopolymère de l'acide acrylique (selon le document WO 02 / 49765) obtenu par polymérisation radicalaire classique non suivi d'une séparation, dont 50% en mole des sites carboxyliques sont neutralisés par le sodium, 15% par le calcium et 15% par le magnésium, de poids moléculaire égal à 9 600 g/mol, et dont 25% en mole des chaînes polymériques présentent un poids moléculaire inférieur à 3 000 g/mol.

Essai n° 2

Cet essai illustre l'art antérieur et met en oeuvre un homopolymère de l'acide acrylique obtenu par polymérisation radicalaire classique non suivi d'une séparation, totalement neutralisé par la soude, de poids moléculaire égal à 3 100 g/mol, et dont 65% en mole des chaînes polymériques présentent un poids moléculaire inférieur à 3 000 g/mol.

Essai n° 3

Cet essai illustre l'art antérieur et met en oeuvre un homopolymère de l'acide acrylique obtenu par polymérisation radicalaire classique suivi d'une séparation, totalement neutralisé par la soude, de poids moléculaire égal à 5 500 g/mol, et dont 37% en mole des chaînes polymériques présentent un poids moléculaire inférieur à 3 000 g/mol.

Essai n° 4

Cet essai illustre l'art antérieur et met en oeuvre un homopolymère de l'acide acrylique obtenu par polymérisation radicalaire classique non suivi d'une séparation, totalement neutralisé par la soude, de poids moléculaire égal à 5 700 g/mol, et dont 40% en mole des chaînes polymériques présentent un poids moléculaire inférieur à 3 000 g/mol.

Essai n° 5

Cet essai illustre l'art antérieur et met en oeuvre un homopolymère de l'acide acrylique obtenu par voie RAFT, totalement neutralisé par la soude, de poids moléculaire égal à 8 150 g/mol, et dont 24% en mole des chaînes polymériques présentent un poids moléculaire inférieur à 3 000 g/mol.

Essai n° 6

Cet essai illustre l'art antérieur et met en oeuvre un homopolymère de l'acide acrylique obtenu par polymérisation radicalaire classique non suivi d'une séparation, totalement neutralisé par la soude, de poids moléculaire égal à 9 400 g/mol, et dont 27% en mole des chaînes polymériques présentent un poids moléculaire inférieur à 3 000 g/mol.

Essai n° 7

Cet essai illustre l'art antérieur et met en oeuvre un homopolymère de l'acide acrylique obtenu par polymérisation radicalaire classique non suivi d'une séparation, totalement neutralisé par la soude, de poids moléculaire égal à 33 100 g/mol, et dont 17% en mole des chaînes polymériques présentent un poids moléculaire inférieur à 3 000 g/mol.

Essai n° 8

Cet essai illustre l'art antérieur et met en oeuvre un homopolymère de l'acide acrylique obtenu par voie RAFT, totalement neutralisé par la soude, de poids moléculaire égal à 31 000 g/mol, et dont 12% en mole des chaînes polymériques présentent un poids moléculaire inférieur à 3 000 g/mol.

Essai n° 9

Cet essai illustre l'invention et met en oeuvre un homopolymère de l'acide acrylique obtenu par polymérisation radicalaire classique suivie d'une séparation, totalement neutralisé par la soude, de poids moléculaire égal à 11 500 g/mol, et dont 17% en mole des chaînes polymériques présentent un poids moléculaire inférieur à 3 000 g/mol.

Essai n° 10

Cet essai illustre l'invention et met en oeuvre un homopolymère de l'acide acrylique obtenu par voie RAFT, totalement neutralisé par la soude, de poids moléculaire égal à 10 800 g/mol, et dont 18% en mole des chaînes polymériques présentent un poids moléculaire inférieur à 3 000 g/mol.

Dans le tableau 1, on a rappelé les caractéristiques des polymères mis en oeuvre pendant l'étape de broyage. On a aussi reporté les valeurs des extraits secs après l'étape c) de broyage et l'étape d) de concentration (respectivement notés $ES_c$ et $ES_d$), de même que les % en poids de particules dont les diamètres sont inférieurs à 1 $\mu$m et 2 $\mu$m (respectivement notés % < 1 $\mu$m et % < 2 $\mu$m).

| Essai n° | 1 | 2 | 3 | 4 | 5 |
|---|---|---|---|---|---|
| Art Antérieur / Invention (« IN ») | AA | AA | AA | AA | AA |
| $M_w$ (g/mol) | 9 600 | 3 100 | 5 500 | 5 700 | 8 150 |
| % < 3 000 g/mol | 25 | 65 | 37 | 40 | 24 |
| $ES_c$ (%) | 49,6 | 51,7 | 49,8 | 50 | 50 |
| $ES_d$ (%) | 71,3 | 71,2 | 71,0 | 71,1 | 71,0 |
| % (en poids) < 1 µm | 73,2 | 73,7 | 74,9 | 73,9 | 73,2 |
| % (en poids) < 2 µm | 96,2 | 95,6 | 93,3 | 96,0 | 96,0 |

| Essai n° | 6 | 7 | 8 | 9 | 10 |
|---|---|---|---|---|---|
| Art Antérieur / Invention (« IN ») | AA | AA | AA | IN | IN |
| Mw (g/mol) | 9 400 | 33 100 | 31 000 | 11 500 | 10 800 |
| % < 3 000 g/mol | 27 | 17 | 12 | 17 | 18 |
| ESa (%) | 50 | - | - | 50,5 | 51,4 |
| Esb (%) | 71,4 | - | - | 71,0 | 71,0 |
| % (en poids) < 1 µm | 73,7 | - | - | 73,4 | 73,2 |
| % (en poids) < 2 µm | 95,8 | - | - | 96,3 | 96,1 |

**Tableau 1**

Les mesures n'ont pas pu être réalisées pour les essais n° 7 et 8, car le broyage n'a pas été possible. Ces polymères de poids moléculaire trop élevé ne permettent pas de broyer le carbonate de calcium jusqu'à un extrait sec proche de 50%.

Dans un deuxième temps, pour les essais n° 1 à 6, et 9 et 10, on a déterminé la stabilité des suspensions obtenues, par mesure de leur viscosité Brookfield™ aux instants t=0 et t=8 jours (sans agitation préalable, à 25°C et à 10 tours / minute) notées respectivement $\mu_0$ et $\mu_8$ (mPa.s). Ces résultats sont reportés dans le tableau 2.

| Essai n° | 1 | 2 | 3 | 4 | 5 |
|---|---|---|---|---|---|
| Art Antérieur / Invention (« IN ») | AA | AA | AA | AA | AA |
| $M_w$ (g/mol) | 9 600 | 3 100 | 5 500 | 5 700 | 8 150 |
| % < 3 000 g/mol | 25 | 65 | 37 | 40 | 24 |
| $\mu_0$ (mPa.s) | 490 | 6 300 | 240 | 250 | |
| $\mu_8$ (mPa.s) | 7 000 | 21 100 | 2 700 | 4 700 | 5 400 |

| Essai n° | 6 | 9 | 10 |
|---|---|---|---|
| Art Antérieur / Invention (« IN ») | AA | IN | IN |
| Mw (g/mol) | 9 400 | 11 500 | 10 800 |
| % < 3 000 g/mol | 27 | 17 | 18 |
| $\mu_0$ (mPa.s) | 300 | 560 | 350 |
| $\mu_8$ (mPa.s) | 9 300 | 2 400 | 3 100 |

**Tableau 2**

On observe que les viscosités obtenues pour les essais n° 1, 2, 5 et 6 sont très supérieures à 5 000 mPa.s après 8 jours ; la suspension aqueuse correspondante s'avère dès lors difficilement manipulable et notamment pompable. De tels essais ne satisfont pas l'homme du métier.

Dans un troisième et dernier temps, pour les suspensions où le broyage a pu être effectué, et pour lesquelles la viscosité Brookfield™ (à 25°C et à 10 tours / minute, 8 jours avant agitation) est inférieure à 5 000 mPa.s, on a déterminé leur facteur de pente f = 100 * ($d_{25}$ / $d_{75}$), ainsi que leur le coefficient de diffusion S de la lumière. Ces résultats figurent dans le tableau 3.

**Tableau 3**

| Essai n° | 3 | 4 | 9 | 10 |
|---|---|---|---|---|
| Art Antérieur / Invention (« IN ») | AA | AA | IN | IN |
| $M_w$ (g/mol) | 5 500 | 5 700 | 11 500 | 10 800 |
| % < 3 000 g/mol | 37 | 40 | 17 | 18 |
| $d_{25}$ / $d_{75}$ * 100 | 31,0 | 30,4 | 32,3 | 34,0 |
| S ($m^2$/kg) | 136 | 138 | 141 | 144 |

Le tableau 3 démontre clairement que seuls les essais n° 9 et 10 correspondant à l'invention conduisent à une amélioration notable du facteur de pente et de l'opacité. En résumé, seuls les homopolymères de l'acide acrylique obtenus par voie RAFT ou par des techniques de séparation, et qui présentent la double caractéristique de posséder un poids moléculaire compris entre 8 000 g/mol et 15 000 g/mol d'une part et de présenter une teneur molaire de chaînes polymériques ayant un poids moléculaire inférieur à 3 000 g/mol, permettent :

- de broyer le carbonate de calcium dans les conditions de l'exemple,
- en vue d'obtenir des suspensions dont le comportement rhéologique au bout de 8 jours est en accord avec les exigenecs de l'homme du métier,
- et dont le facteur de pente et le coefficient de diffusion S de la lumière ont été améliorés.

**Revendications**

1. Procédé de fabrication d'une suspension aqueuse de carbonate de calcium naturel **caractérisé en ce qu'**il comprend les étapes suivantes:

    a) pré-broyer à sec et/ou en humide le carbonate de calcium jusqu'à un diamètre moyen de 0,5 à 500 $\mu$m ($d_{50}$) en présence ou en l'absence d'agents dispersants,
    b) former une suspension aqueuse du produit issu de l'étape a) par ajout de la quantité nécessaire d'eau pour obtenir une teneur en carbonate de calcium sec comprise entre 10% et 80%, préférentiellement entre 30% et 50% et très préférentiellement entre 35% et 45%,
    c) broyer la suspension issue de l'étape b) en présence d'un homopolymère et/ou d'un copolymère de l'acide (méth)acrylique présentant simultanément un poids moléculaire compris entre 8 000 g/mol et 15 000 g/mol, préférentiellement entre 10 000 g/mol et 14 000 g/mol, très préférentiellement de l'ordre de 12 000 g/mol et une teneur molaire en chaînes polymériques de poids moléculaire inférieur à 3 000 g/ mol inférieure à 20%, préférentiellement 15%, très préférentiellement 10%,
    d) éventuellement concentrer la suspension aqueuse obtenue à l'étape c) par tout moyen connu
    de manière à obtenir une teneur en carbonate de calcium au moins égale à 5 % au-dessus de la concentration de l'étape b) ou c), de manière préférentiellecomprise entre 60% et 80% en poids, très préférentiellement comprise entre 65% et 75 % en poids,
    e) ajouter éventuellement un agent dispersant à la suspension aqueuse pendant ou après l'étape d).

2. Procédé selon la revendication 1, **caractérisé en ce que** ledit homopolymère et/ou copolymère de l'acide (méth)acrylique est obtenu par polymérisation radicalaire en émulsion ou en solution, suivi par au moins une étape de séparation statique ou dynamique, ladite étape de séparation mettant en oeuvre un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

**3.** Procédé selon la revendication 1, **caractérisé en ce que** ledit homopolymère et/ou copolymère de l'acide (méth)acrylique est obtenu par polymérisation radicalaire contrôlée, préférentiellement par polymérisation par transfert réversible par addition fragmentation (RAFT).

**4.** Procédé selon la revendication 3, **caractérisé en ce que** la polymérisation par transfert réversible par addition fragmentation (RAFT) met en oeuvre au moins un agent de transfert de chaîne, tel que revendiqué dans les documents WO 02 / 070571, WO 2004 / 014967 et WO 2005 / 095466.

**5.** Procédé selon l'une des revendications 1 à 4, **caractérisé en ce que** ledit homopolymère et/ou copolymère de l'acide (méth)acrylique est totalement acide, ou totalement ou partiellement neutralisé par un agent de neutralisation choisi parmi les hydroxydes de sodium, de potassium, les hydroxydes et / ou oxydes de calcium, de magnésium, l'ammoniaque, ou leurs mélanges, préférentiellement par un agent de neutralisation choisi parmi l'hydroxyde de sodium, de potassium, l'ammoniaque, ou leurs mélanges, très préférentiellement par un agent de neutralisation qui est l'hydroxyde de sodium.

**6.** Procédé selon l'une des revendications 1 à 5, **caractérisé en ce que**, outre l'acide (méth)acrylique, ledit copolymère de l'acide (méth)acrylique contient un autre monomère choisi parmi l'anhydride (méth)acrylique, le (méth)acrylamide, les esters (méth)acryliques et préférentiellement parmi les acrylates de méthyle, d'éthyle, d'isopropyle, de n-propyle, d'isobutyle, de n-butyle, de ter-butyle, de 2-éthylhexyle, les méthacrylates de méthyle, d'éthyle, les méthacrylates hydroxylés, le styrène, l'alpha-méthylstyrène, le styrène sulfonate, ou l'acide acrylamido-2-méthyl-2-propane-sulfonique, les phosphates d'acrylate et de méthacrylate d'éthylène glycol, et leurs mélanges, et **en ce que** cet autre monomère est préférentiellement l'acrylamide.

**7.** Procédé selon l'une des revendications 1 à 6, **caractérisé en ce que** ledit homopolymère et/ou copolymère de l'acide (méth)acrylique est mis en oeuvre à raison de 0,1 à 1,0 %, préférentiellement de 0,2 à 0,6 % en poids sec, par rapport au poids sec de carbonate de calcium.

**8.** Procédé selon l'une des revendications 1 à 7, **caractérisé en ce que**, outre ledit homopolymère et/ou copolymère de l'acide (méth)acrylique, un autre homopolymère et/ou copolymère de l'acide (méth)acrylique est mis en oeuvre pendant ou après l'étape de concentration d).

**9.** Procédé selon l'une des revendications 1 à 8, **caractérisé en ce que** la concentration en poids sec de carbonate de calcium de la suspension aqueuse obtenue à l'issue de l'étape de broyage c) est comprise entre 10% et 80% du poids total de ladite suspension, préférentiellement comprise entre 30% et 50%, très préférentiellement entre 35% et 45%.

**10.** Procédé selon l'une des revendications 1 à 9, **caractérisée en ce que** la concentration en poids sec de carbonate de calcium de la suspension aqueuse obtenue à l'issue de l'étape éventuelle de concentration d) est au moins égale à 5% au-dessus de la concentration du produit de l'étape b) ou c), est préférentiellement comprise entre 60% et 80%, très préférentiellement comprise entre 65% et 75% du poids total de ladite suspension.

**11.** Procédé selon l'une quelconque des revendications 1 à 10, **caractérisé en ce qu'**il comprend en outre une étape f) de séchage par tout moyen connu du produit obtenu à l'étape c) ou d) ou e) pour produire un carbonate de calcium sec.

**12.** Carbonate de calcium sec **caractérisé en ce que** il est obtenu selon le procédé de la revendication 11.

**13.** Suspension aqueuse de carbonate de calcium caractérisé en ce en ce qu'elle contient un homopolymère et/ou d'un copolymère de l'acide (méth)acrylique mis en oeuvre dans le procédé selon l'une quelconque des revendications 1 à 11.

**14.** Utilisation de la suspension aqueuse de carbonate de calcium selon la revendication 13 dans les applications papetières telles que la charge de masse ou le couchage.

**15.** Sauce de couchage contenant la suspension aqueuse de carbonate de calcium selon la revendication 13.

**16.** Composition de charge de masse contenant la suspension aqueuse de carbonate de calcium selon la revendication 13.

**17.** Utilisation de la suspension aqueuse de carbonate de calcium selon la revendication 13 dans l'industrie de la peinture, des matières plastiques ainsi que des mastics.

**Patentansprüche**

**1.** Verfahren zur Herstellung einer wässerigen Suspension von natürlichem Calciumcarbonat, **dadurch gekennzeichnet, dass** es die folgenden Schritte umfasst:

a) trockenes und/oder feuchtes Vorzerkleinern des Calciumcarbonats bis zu einem durchschnittlichen Durchmesser von 0,5 bis 500 $\mu$m ($d_{50}$) bei Vorhandensein oder Nichtvorhandensein von Dispersionsmitteln,
b) Bilden einer wässerigen Suspension des aus Schritt a) hervorgegangenen Produktes durch Hinzufügen der notwendigen Wassermenge, um einen Gehalt an trockenem Calciumcarbonat zwischen 10 % und 80 %, vorzugsweise zwischen 30 % und 50 % und besonders bevorzugt zwischen 35 % und 45 % zu erhalten,
c) Zerkleinern der aus Schritt b) hervorgegangenen Suspension bei Vorhandensein eines Homopolymers und/oder eines Copolymers der (Meth)acrylsäure, die gleichzeitig ein Molekulargewicht zwischen 8 000 g/mol und 15 000 g/mol, vorzugsweise zwischen 10 000 g/mol und 14 000 g/mol, besonders bevorzugt von ungefähr 12 000 g/mol und einen Molgehalt in Polymerketten mit einem Molekulargewicht unter 3 000 g/mol von weniger als 20 %, vorzugsweise 15 %, besonders bevorzugt von 10 % aufweisen,
d) eventuell Konzentrieren der in Schritt c) erhaltenen wässerigen Suspension durch jedes bekannte Mittel um einen Gehalt an Calciumcarbonat mindestens gleich 5 % über der Konzentration aus Schritt b) oder c) zu erhalten, vorzugsweise zwischen 60 und 80 Gew.-%, besonders bevorzugt zwischen 65 und 75 Gew.-%,
e) eventuell Hinzufügen eines Dispersionsmittels zu der wässerigen Suspension während oder nach dem Schritt d).

**2.** Verfahren nach Anspruch 1, **dadurch gekennzeichnet, dass** das Homopolymer und/oder Copolymer der (Meth)acrylsäure durch radikalische Polymerisation in Emulsion oder in Lösung erhalten wird, gefolgt von mindestens einem Schritt der statischen oder dynamischen Trennung, wobei der Schritt der Trennung ein oder mehrere polare Lösungsmittel einsetzt, die vorzugsweise der Gruppe angehören, die von Wasser, Methanol, Ethanol, Propanol, Isopropanol, den Butanolen, Aceton, Tetrahydrofuran oder ihren Gemischen gebildet ist.

**3.** Verfahren nach Anspruch 1, **dadurch gekennzeichnet, dass** das Homopolymer und/oder das Copolymer der (Meth)acrylsäure durch kontrollierte radikalische Polymerisation, vorzugsweise durch reversible Fragmentierungs-Additions-Übertragungs-Polymerisation (RAFT), erhalten wird.

**4.** Verfahren nach Anspruch 3, **dadurch gekennzeichnet, dass** die reversible Fragmentierungs-Additions-Übertragungs-Polymerisation (RAFT) mindestens ein Kettenübertragungsmittel einsetzt, wie in den Dokumenten WO 02/070571, WO 2004/014967 und WO 2005/095466 beansprucht.

**5.** Verfahren nach einem der Ansprüche 1 bis 4, **dadurch gekennzeichnet, dass** das Homopolymer und/oder Copolymer der (Meth)acrylsäure vollkommen sauer ist, oder vollkommen oder teilweise durch ein Neutralisierungsmittel neutralisiert ist, das ausgewählt ist unter den Hydroxiden von Natrium, Kalium, den Hydroxiden und/oder Oxiden von Calcium, Magnesium, Ammoniak oder ihren Gemischen, vorzugsweise durch ein Neutralisierungsmittel, das ausgewählt ist unter dem Hydroxid von Natrium, Kalium, dem Ammoniak oder ihren Gemischen, besonders bevorzugt durch ein Neutralisierungsmittel, das Natriumhydroxid ist.

**6.** Verfahren nach einem der Ansprüche 1 bis 5, **dadurch gekennzeichnet, dass** außer der (Meth)acrylsäure das Copolymer der (Meth)acrylsäure ein weiteres Monomer enthält, das ausgewählt ist unter dem (Meth)acrylanhydrid, dem (Meth)acrylamid, den (Meth)acrylestern und vorzugsweise unter den Acrylaten von Methyl, Ethyl, Isopropyl, n-Propyl, Isobutyl, n-Butyl, tert-Butyl, 2-Ethylhexyl, den Methacrylaten von Methyl, Ethyl, den hydroxylierten Methacrylaten, Styrol, Alpha-Methylstyrol, Styrolsulfonat oder der Acrylamid-2-Methyl-2-Propansulfonsäure, den Phosphaten von Acrylat und Methacrylat von Ethylenglykol und ihren Gemischen, und dass dieses weitere Monomer vorzugsweise Acrylamid ist.

**7.** Verfahren nach einem der Ansprüche 1 bis 6, **dadurch gekennzeichnet, dass** das Homopolymer und/oder Copolymer der (Meth)acrylsäure im Verhältnis von 0,1 bis 1,0 %, vorzugsweise von 0,2 bis 0,6 % in Trockengewicht bezogen auf das Trockengewicht von Calciumcarbonat eingesetzt wird.

**8.** Verfahren nach einem der Ansprüche 1 bis 7, **dadurch gekennzeichnet, dass** außer dem Homopolymer und/oder Copolymer der (Meth)acrylsäure ein weiteres Homopolymer und/oder Copolymer der (Meth)acrylsäure während oder nach dem Konzentrationsschritt d) eingesetzt wird.

**9.** Verfahren nach einem der Ansprüche 1 bis 8, **dadurch gekennzeichnet, dass** die Konzentration in Trockengewicht von Calciumcarbonat der wässerigen Suspenssion, die nach dem Zerkleinerungsschritt c) erhalten wird, zwischen 10 % und 80 % des Gesamtgewichts der Suspension, vorzugsweise zwischen 30 % und 50 %, besonders bevorzugt zwischen 35 % und 45 % beträgt.

**10.** Verfahren nach einem der Ansprüche 1 bis 9, **dadurch gekennzeichnet, dass** die Konzentration in Trockengewicht der wässerigen Suspension, die nach dem eventuellen Konzentrationsschritt d) erhalten wird, mindestens gleich 5 % über der Konzentration des Produktes aus Schritt b) oder c) ist, vorzugsweise zwischen 60 % und 80 %, besonders bevorzugt zwischen 65 % und 75 % des Gesamtgewichts der Suspension liegt.

**11.** Verfahren nach einem der Ansprüche 1 bis 10, **dadurch gekennzeichnet, dass** es ferner einen Schritt f) des Trocknens des in Schritt c) oder d) oder e) erhaltenen Produktes durch jedes bekannte Mittel umfasst, um ein trockenes Calciumcarbonat zu produzieren.

**12.** Trockenes Calciumcarbonat, **dadurch gekennzeichnet, dass** es nach dem Verfahren aus Anspruch 11 erhalten wird.

**13.** Wässerige Suspension von Calciumcarbonat, **dadurch gekennzeichnet, dass** sie ein Homopolymer und/oder Copolymer der (Meth)acrylsäure enthält, das in dem Verfahren nach einem der Ansprüche 1 bis 11 eingesetzt wird.

**14.** Verwendung der wässerigen Suspension von Calciumcarbonat nach Anspruch 13 bei den Papieranwendungen, wie dem Beschicken von Masse oder Beschichten.

**15.** Streichmasse, die die wässerige Suspension von Calciumcarbonat nach Anspruch 13 enthält.

**16.** Zusammensetzung einer Streichmasse, die die wässerige Suspension von Calciumcarbonat nach Anspruch 13 enthält.

**17.** Verwendung der wässerigen Suspension von Calciumcarbonat nach Anspruch 13 in der Farb-, Kunststoffindustrie sowie in der Dichtstoffindustrie.

**Claims**

**1.** Method of making an aqueous suspension of natural calcium carbonate **characterized in that** it comprises the following steps:

a) dry and/or wet pre-grinding of calcium carbonate to an average diameter of 0.5 to 500 microns ($d_{50}$) in the presence or absence of dispersing agents,
b) forming an aqueous suspension of the product from step a) by adding the necessary amount of water to obtain a dry calcium carbonate content of between 10% and 80%, preferably between 30% and 50% and more preferably between 35% and 45%,
c) grinding the suspension from step b) in the presence of a homopolymer and/or copolymer of (meth)acrylic acid simultaneously having a molecular weight between 8000 g/mol and 15000 g/mol, preferably between 10000 g/mol and 14000 g/mol, more preferably of 12000 g/mol and a molar content of polymer chains of molecular weight of less than 3000 g/mol less than 20%, preferably 15%, more preferably 10%,
d) optionally concentrating the aqueous suspension obtained in step c) by any known means to obtain a calcium carbonate content of at least 5% above the concentration of step b) or c), preferably between 60 and 80 wt.%, and more preferably between 65 and 75 wt.%,
e) optionally adding a dispersing agent to the aqueous suspension during or after step d).

**2.** Method according to claim 1, **characterized in that** said homopolymer and/or copolymer of (meth)acrylic acid is obtained by emulsion or solution free radical polymerization, followed by at least one step of static or dynamic separation, wherein said separation step uses one or more polar solvents, preferably selected from the group consisting of water, methanol, ethanol, propanol, isopropanol, butanols, acetone, tetrahydrofuran or mixtures thereof.

3. Method according to claim 1, **characterized in that** said homopolymer and/or copolymer of (meth)acrylic acid is obtained by controlled free radical polymerization, preferably by reversible addition-fragmentation chain transfer (RAFT) polymerization.

4. Method according to claim 3, **characterized in that** the reversible addition-fragmentation chain transfer (RAFT) polymerization uses at least one chain transfer agent, such as claimed in WO 02/070571, WO 2004/014967 and WO 2005/095466.

5. Method according to any one of claims 1 to 4, **characterized in that** said homopolymer and/or copolymer of (meth)acrylic acid is totally acid, or totally or partially neutralized by a neutralizing agent selected from sodium and potassium hydroxides, calcium and magnesium hydroxides and/or oxides, ammonia, or mixtures thereof, preferably by a neutralizing agent selected from sodium hydroxide, potassium hydroxide, ammonia, or mixtures thereof, more preferably by a neutralizing agent which is sodium hydroxide.

6. Method according to any one of claims 1 to 5, **characterized in that**, in addition to (meth)acrylic acid, said copolymer of (meth)acrylic acid contains another monomer selected from (meth)acrylic anhydride, (meth)acrylamide, (meth)acrylic esters and preferably from methyl, ethyl, isopropyl, n-propyl, isobutyl, n-butyl, tert-butyl, 2-ethylhexyl acrylates, methyl, ethyl methacrylates, hydroxy methacrylates, styrene, alpha-methylstyrene, styrene sulfonate, or acrylamido-2-methyl-2-propanesulfonic acid, acrylate phosphates and ethylene glycol methacrylate, and mixtures thereof, and **in that** the said other monomer is preferably acrylamide.

7. Method according to any one of claims 1 to 6, **characterized in that** said homopolymer and/or copolymer of (meth)acrylic acid is used in an amount of 0.1 to 1.0%, preferably of 0.2 to 0.6 dry wt.%, based on the dry weight of calcium carbonate.

8. Method according to any one of claims 1 to 7, **characterized in that**, in addition to said homopolymer and/or copolymer of (meth)acrylic acid, another homopolymer and/or copolymer of (meth)acrylic acid is used during or after the concentration step d).

9. Method according to any one of claims 1 to 8, **characterized in that** the calcium carbonate dry weight concentration of the aqueous suspension obtained after grinding step c) is between 10% and 80% of the total weight of said suspension, preferably between 30% and 50%, more preferably between 35% and 45%.

10. Method according to any one of claims 1 to 9, **characterized in that** the calcium carbonate dry weight concentration of the aqueous suspension obtained after the optional concentration step d) is at least 5% above the product concentration from step b) or c), is preferably between 60% and 80%, more preferably between 65% and 75% of the total weight of said suspension.

11. Method according to any one of claims 1 to 10, **characterized in that** it further comprises a drying step f) of drying, by any known means, the product obtained in step c) or d) or e) to produce a dry calcium carbonate.

12. Dry calcium carbonate **characterized in that** it is obtained according to the method of claim 11.

13. Aqueous suspension of calcium carbonate **characterized in that** it contains a homopolymer and/or copolymer of (meth)acrylic acid used in the method according to any one of claims 1 to 11.

14. Use of the aqueous suspension of calcium carbonate according to claim 13 in paper applications such as filling or coating.

15. Coating formulation containing the aqueous suspension of calcium carbonate according to claim 13.

16. Filling composition containing the aqueous suspension of calcium carbonate according to claim 13.

17. Use of the aqueous suspension of calcium carbonate according to claim 13 in the paint, plastic and sealant industry.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2539137
- FR 2683536
- FR 2683537
- FR 2683538
- FR 2683539
- FR 2683532
- FR 2683533
- EP 0894836 A
- EP 0850685 A
- WO 0039029 A
- EP 0894833 A
- EP 0607840 A
- FR 0701591
- FR 2885906
- US 4507422 A
- WO 02070571 A
- WO 2004014967 A
- WO 2005095466 A
- WO 0249765 A

**Littérature non-brevet citée dans la description**

- **P. BURRI.** Pigment concepts for improved paper and print properties. *ATIP Conference,* 23 Juin 2000
- *Polymer,* 2005, vol. 46 (19), 8565-8572
- Synthesis and Characterization of Poly(acrylic acid) Produced by RAFT Polymerization. Application as a Very Efficient Dispersant of CaCO3, Kaolin, and TiO2. *Macromolecules,* 2003, vol. 36 (9), 3066-3077